(19) Europäisches Patentamt

European Patent Office

Office européen des brevets

(11) Veröffentlichungsnummer: **0 279 029 B1**

## (12) EUROPÄISCHE PATENTSCHRIFT

(45) Veröffentlichungstag der Patentschrift: **11.03.92**

(21) Anmeldenummer: **87116194.9**

(22) Anmeldetag: **04.11.87**

(51) Int. Cl.⁵: **G02F 1/133**

(54) Flüssigkristallzelle.

(30) Priorität: **19.02.87 DE 3705259**

(43) Veröffentlichungstag der Anmeldung:
**24.08.88 Patentblatt 88/34**

(45) Bekanntmachung des Hinweises auf die
Patenterteilung:
**11.03.92 Patentblatt 92/11**

(84) Benannte Vertragsstaaten:
**DE FR GB IT SE**

(56) Entgegenhaltungen:
**EP-A- 0 006 566      EP-A- 0 030 600**
**DE-A- 2 533 705      DE-A- 3 135 552**
**GB-A- 2 056 739      US-A- 3 932 026**

(73) Patentinhaber: **VDO Adolf Schindling AG**
**Gräfstrasse 103**
**W-6000 Frankfurt/Main 90(DE)**

(72) Erfinder: **Fertig, Werner, Dr.**
**Schillerstrasse 25**
**W-6101 Rossdorf(DE)**

(74) Vertreter: **Klein, Thomas, Dipl.-Ing. (FH)**
**Sodener Strasse 9 Postfach 6140**
**W-6231 Schwalbach a. Ts.(DE)**

EP 0 279 029 B1

## Beschreibung

Die Erfindung betrifft eine Flüssigkristallzelle mit zwei im Abstand voneinander angeordneten, einen Flüssigkristall einschließenden Substraten, von denen mindestens eines transparent ist und auf seiner inneren Oberfläche transparente Bildelektroden und metallische Leiterbahnen zum Anlegen von Spannung an die Bildelektroden aufweist.

Bei derartigen Flüssigkristallzellen (EP-A 6566; DE-A 31 35 552; EP-A 30 600) ist es bekannt auf den tranparenten Bildelektroden Entspiegelungsschichten anzuordnen.

Aufgabe der Erfindung ist es eine Flüssigkristallzelle der eingangs genannten Art zu schaffen, die geeignet ist hochauflösende Anzeigen darzustellen, wobei eine Kontrastverminderung weitgehend vermieden wird.

Diese Aufgabe wird erfindungsgemäß dadurch gelöst, daß die Leiterbahnen nicht transparent sind und von einer Interferenzschicht zur Verringerung des von ihnen reflektierten Lichts überdeckt sind.

Die normalerweise an ihrer Oberfläche reflektierenden metallischen Leiterbahnen würden bei Auflichtbetrieb und bei Durchlichtbetrieb unter Auflichtbedingungen zu einer Kontrastverminderung führen. Dies wird durch die Interferenzschicht weitgehend vermieden, so daß die Flüssigkristallzelle ohne aufwendiges und teures Herstellungsverfahren mit gutem Kontrastverhalten herstellbar ist.

Eine Weiterbildung der Erfindung besteht darin, daß die Interferenzschicht aus einem transparenten Isolator besteht und im wesentlichen ganzflächig auf die die Leiterbahnen tragende Fläche der Flüssigkristallzelle aufgebracht ist. Diese Weiterbildung hat den Vorteil, daß viele verschiedene Stoffe zur Herstellung dieser Schicht verwendet werden können. Eine Strukturierung dieser Schicht ist nicht erforderlich.

Eine andere Weiterbildung sieht vor, daß die Interferenzschicht aus selektiv auf die Leiterbahnen aufgebrachtem vorzugsweise anodischen Oxid besteht. Bei dieser Weiterbildung ergibt sich die Strukturierung der Interferenzschicht entprechend den Leiterbahnen praktisch ohne zusätzlichen Aufwand durch die anodische Aufbringung der Oxidschicht.

Gemäß einer anderen Weiterbildung ist vorgesehen, daß die Interferenzschicht aus einem die Bildeletroden bildenden Material besteht. Hierbei erfolgt die strukturierte Aufbringung der Interferenzschicht mit den gleichen Verfahrensschritten und Vorrichtungen (Masken) wie die ohnehin erforderliche Aufbringung der Bildelektrode. Als Material für die Bildelektroden und die Interferenzschicht kommt hierbei in vorteilhafter Weise Indium-Zinn-Oxid in Frage.

Die Erfindung läßt zahlreiche Ausführungsformen zu. Drei davon sind schematisch in der Zeichnung an Hand mehrerer Figuren dargestellt und nachfolgend beschrieben.

Gleiche Teile sind in den Figuren mit gleichen Bezugzeichen versehen.

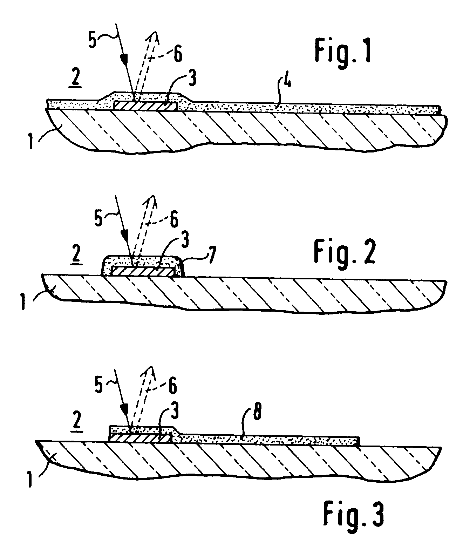

In den Figuren 1 bis 3 ist jeweils zur Erläuterung eines der Ausführungsbeispiele eine Einzelheit einer erfindungsgemäßen Flüssigkristallzelle im Schnitt dargestellt. Dabei befindet sich auf einem Substrat (Glas) 1 auf der zum Innenraum 2 der Flüssigkristallzelle weisenden Oberfläche eine metallische Leiterbahn 3.

Bei dem Ausführungsbeispiel nach Fig. 1 besteht die Interferenzschicht aus einer ganzflächigen Schicht 4 aus einem transparenten Isolator, beispielsweise $TiO_2$, $SiO_2$ oder $Si_3N_4$. Da diese Schicht nicht leitet und transparent ist, können alle Leiterbahnen und Bildelektroden mit dieser Schicht überdeckt sein, ohne daß die Funktion der Flüssigkristallzelle dadurch gestört wird.

Einfallendes Licht 5 wird sowohl an der Oberfläche der metallischen Leiterbahn 3 als auch an der Oberfläche der Interferenzschicht 4 reflektiert. Durch eine geeignete Stärke der Interferenzschicht 4 wird erreicht, daß sich das insgesamt reflektierte Licht bei in der Praxis vorkommenden Einfallswinkeln in einem wesentlichen Teil des sichtbaren Bereichs auslöscht.

Bei dem Ausführungsbeispiel nach Fig. 2 ist die Leiterbahn 3 mit einer anodischen Oxidschicht 7 versehen, die beispielsweise aus $Al_2O_3$ und $Ta_2O_5$ besteht. Verfahren zur Aufbringung derartiger Schichten sind an sich bekannt und brauchen im Zusammenhang mit der Erfindung nicht näher erläutert zu werden.

Bei dem Ausführungsbeispiel nach Fig. 3 erfolgt eine Überlappung der Leiterbahnen mit einer transparenten Bildelektrode 8, die vorzugsweise aus Indium-Zinn-Oxid besteht. Gleichzeitig mit der Herstellung der Bildelektroden werden dadurch die Leiterbahnen mit einer Interferenzschicht versehen.

## Patentansprüche

1. Flüssigkristallzelle mit zwei im Abstand voneinander angeordneten, einen Flüssigkristall einschließenden Substraten, von denen mindestens eines (1) transparent ist und auf seiner inneren Oberfläche transparente Bildelektroden (8) und metallische Leiterbahnen (3) zum Anlegen von Spannung an die Bildeletroden (8) aufweist, dadurch gekennzeichnet, daß die Leiterbahnen (3) nicht transparent sind und von einer Interferenzschicht (4, 7, 8) zur Verringerung des von ihnen reflektierten Lichts überdeckt sind.

2. Flüssigkristallzelle nach Anspruch 1, dadurch gekennzeichnet, daß die Interferenzschicht (4) aus einem transparenten Isolator besteht und im wesentlichen ganzflächig auf die die Leiterbahnen (3) tragende Fläche der Flüssigkristallzelle aufgebracht ist.

3. Flüssigkristallzelle nach Anspruch 1, dadurch gekennzeichnet, daß die Interferenzschicht (7) aus selektiv auf die Leiterbahnen (3) aufgebrachtem Oxid besteht.

4. Flüssigkristallzelle nach Anspruch 1, dadurch gekennzeichnet, daß die Interferenzschicht (8) aus einem die Bildelektroden bildenden Material besteht.

5. Flüssigkristallzelle nach Anspruch 4, dadurch gekennzeichnet, daß das Material Indium-Zinn-Oxid ist.

## Claims

1. Liquid crystal cell with two substrates which are positioned at a distance from one another, enclose a liquid crystal, and at least one (1) of which is transparent and has on its inner surface transparent image electrodes (8) and metallic conductive strips (3) for application of voltage to the image electrodes (8), characterized in that the conductive strips (3) are not transparent and are covered by an interference layer (4, 7, 8) to reduce the light reflected from them.

2. Liquid crystal cell according to Claim 1, characterized in that the interference layer (4) consists of a transparent insulator and is applied essentially full-face on the surface of the liquid crystal cell carrying the conductive strips (3).

3. Liquid crystal cell according to Claim 1, characterized in that the interference layer (7) consists of anodic oxide applied selectively to the conductive strips (3).

4. Liquid crystal cell according to Claim 1, characterized in that the interference layer (8) consists of a material which forms the image electrodes.

5. Liquid crystal cell according to Claim 4, characterized in that the material is indium-tin oxide.

## Revendications

1. Cellule à cristaux liquides comportant deux substrats à une certaine distance l'un de l'autre et renfermant une matière à propriétés de cristaux liquides, substrats dont l'un (1) au moins est transparent et présente sur sa face intérieure des électrodes (8) formatrices d'image(s), transparentes, et des pistes métalliques (3) conductrices destinées à appliquer une tension électrique à ces électrodes (8), cellule caractérisée en ce que les pistes conductrices (3) ne sont pas transparentes et sont recouvertes d'une couche (4, 7, 8) à interférences destinée à affaiblir la lumière qu'elles réfléchissent.

2. Cellule à cristaux liquides selon la revendication 1, caractérisée en ce que la couche (4) à interférences est composée d'une matière isolante transparente et est appliquée pratiquement sur toute l'étendue de la surface, portant les pistes conductrices (3), de la cellule à cristaux liquides.

3. Cellule à cristaux liquides selon la revendication 1, caractérisée en ce que la couche (7) à interférences est composée d'un oxyde déposé sélectivement sur les pistes conductrices (3).

4. Cellule à cristaux liquides selon la revendication 1, caractérisée en ce que la couche (8) à interférences est composée de la matière qui forme les électrodes d'image.

5. Cellule selon la revendication 4, caractérisée en ce que la matière est un oxyde d'indium-étain.

Fig.1

Fig.2

Fig.3